# EUROPEAN PATENT APPLICATION

(11) **EP 4 387 125 A1**
(43) Date of publication of application: **19.06.2024**
(21) Application number: 23194135.2
(22) Date of filing: 30.08.2023
(51) Int. Cl.: H04B 10/70, H04J 14/02, H04B 10/50

(54) **MULTIPLEXING DEVICE, QKD SYSTEM, QKD DEVICE, MULTIPLEXING METHOD, AND ADJUSTMENT METHOD**

(30) Priority: 15.12.2022 JP 2022199969
(71) Applicant: KABUSHIKI KAISHA TOSHIBA, Minato-ku Tokyo 105-0023 (JP)
(72) Inventor: MURAKAMI, Akira, Tokyo, 105-0023 (JP); TANIZAWA, Yoshimichi, Tokyo, 105-0023 (JP)
(74) Representative: Marks & Clerk LLP

(57) **Abstract**

According to one arrangement, a multiplexing device (5) includes a multiplexing module (51), a branching module (52), a light receiving module (53), and a control module (54). The multiplexing module (51) performs optical wavelength multiplexing on quantum signals transmitted from a plurality of quantum key distribution (QKD) devices (1, 2). The branching module (52) branches an optical wavelength multiplexed quantum signal into a quantum signal to be measured and a quantum signal to be output to external at a predetermined branching ratio. The light receiving module (53) measures intensity of the quantum signal to be measured to acquire a measurement result. The control module (54) adjusts intensity of the quantum signal output from each of the plurality of QKD devices (1, 2) based on the measurement result and the predetermined branching ratio.

## Description

### FIELD

The present disclosure relates to a multiplexing device, a QKD system, a QKD device, a multiplexing method, and an adjustment method.

### BACKGROUND

Quantum Key distribution technology (hereinafter referred to as QKD) is a technology for securely sharing an encryption key between a transmission device that continuously transmits a single photon and a reception device that receives a single photon, which are connected by an optical fiber. An encryption key shared by the QKD is guaranteed not to be eavesdropped based on the principle of quantum mechanics. It is guaranteed by information theory that data subjected to encrypted data communication using a cryptographic communication method called a one-time pad by using a shared encryption key cannot be decrypted by an eavesdropper having any knowledge.

However, the conventional technique has a problem that the key generation speed of the QKD device decreases in the wavelength multiplexing system.

### BRIEF DESCRIPTION OF THE DRAWINGS

Fig. 1 is a diagram illustrating a configuration example of a single general QKD system;
Fig. 2 is a diagram illustrating a configuration example of a QKD system using a plurality of QKD devices;
Fig. 3 is a diagram illustrating Example 1 in a case where an optical wavelength multiplexing technique is used;
Fig. 4 is a diagram illustrating Example 2 in a case where an optical wavelength multiplexing technique is used;
Fig. 5 is a diagram illustrating an example of a device configuration of a QKD system according to a first arrangement;
Fig. 6 is a diagram illustrating an example of a functional configuration of a multiplexing device according to the first arrangement;
Fig. 7 is a diagram for explaining an example of a multiplexing method according to the first arrangement;
Fig. 8 is a diagram illustrating an example of a functional configuration of a multiplexing device according to a second arrangement;
Fig. 9 is a diagram illustrating an example of a functional configuration of a multiplexing device and a transmission device according to a third arrangement; and
Fig. 10 is a diagram illustrating an example of a functional configuration of a multiplexing device and a transmission device according to a modification of the third arrangement.

### DETAILED DESCRIPTION

In general, according to one arrangement, a multiplexing device includes a multiplexing module, a branching module, a light receiving module, and a control module. The multiplexing module is configured to perform optical wavelength multiplexing on quantum signals transmitted from a plurality of quantum key distribution (QKD) devices. The branching module is configured to branch an optical wavelength multiplexed quantum signal, at a predetermined branching ratio, into a quantum signal to be measured and a quantum signal to be output to external. The light receiving module is configured to measure intensity of the quantum signal to be measured to acquire a measurement result. The control module is configured to adjust intensity of the quantum signal output from each of the plurality of QKD devices based on the measurement result and the predetermined branching ratio.

Exemplary arrangements of a multiplexing device, a QKD system, a QKD device, a multiplexing method, and an adjustment method will be described below in detail with reference to the accompanying drawings. The present invention is not limited to the following arrangements.

Hereinafter, an encryption key exchange device using a quantum key distribution (QKD) technology is referred to as a QKD device. An encryption key exchange system including a plurality of QKD devices is referred to as a QKD system. First, an example of the general QKD system will be described.

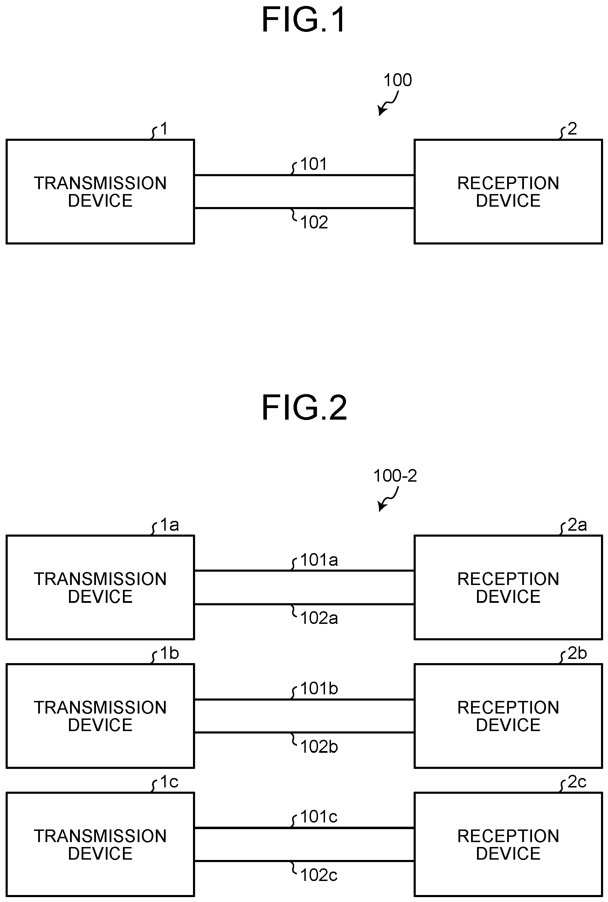

Fig. 1 is a diagram illustrating a configuration example of a single general QKD system. A general QKD system 100 includes a transmission device 1, a reception device 2, and two optical fibers 101 and 102.

The transmission device 1 is a QKD device on the transmission side. The transmission device 1 generates a photon, encodes encryption key information indicating bit information of 0 or 1 in the photon, and transmits the photon encoded with the encryption key information to the reception device 2.

The reception device 2 is a QKD device on the reception side. The reception device 2 receives the photon sent from the transmission device 1 and decodes the encryption key information.

The optical fiber 101 is used as a quantum communication path for transmitting quantum signals encoded with encryption key information.

The optical fiber 102 is used as a classical communication path for transmitting a classical signal including QKD control information. For example, the classical communication path is used for transmission of a synchronization signal between a transmitter of photons used by the transmission device 1 and the reception device 2 of photons used by the reception device 2, and an optical signal such as data communication.

Since the quantum signal in the quantum communication path is very weak (one-photon level per pulse) as compared with the optical signal in the classical communication path, the optical fibers 101 and 102 which are physically different are usually used for the quantum communication path and the classical communication path. In addition, in order to transmit a signal dedicated to the QKD device, the optical fiber 101 of the quantum communication path and the optical fiber 102 of the classical communication path need to be dark fibers.

Fig. 2 is a diagram illustrating a configuration example of a QKD system 100-2 using a plurality of QKD devices. In the QKD system 100-2, in order to improve the transmission speed of the encryption key to be shared, the number of QKD devices is increased to improve the transmission speed of the encryption key in the entire QKD system 100-2. As illustrated in Fig. 2, for example, the transmission speed of the encryption key when three sets of QKD systems are used is three times that when the single set of QKD system 100 (Fig. 1) is used. However, in this case, the number of optical fibers required increases. It is not practical to increase the number of optical fibers required for implementing a QKD system in society.

Therefore, there is a method of realizing a quantum communication path and a classical communication path with one optical fiber using an optical wavelength multiplexing technology (JP 4784202 B2). By shifting the wavelength of the optical signal of the quantum communication path and the wavelength of the optical signal of the classical communication path, even when the transmission is performed through the same optical fiber, it is possible to transmit the encryption key by QKD without interfering with each other. With this technique, one optical fiber is required for the single QKD system.

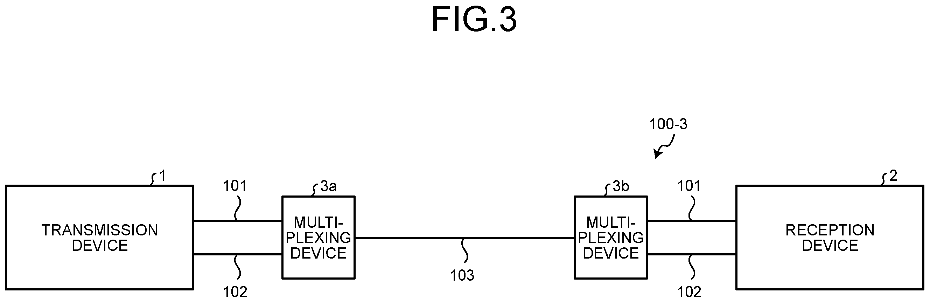

Fig. 3 is a diagram illustrating Example 1 in a case where an optical wavelength multiplexing technique is used. In the QKD system 100-3 of Fig. 3, multiplexing devices 3a and 3b that perform wavelength multiplexing of optical signals and an optical fiber 103 are used in addition to a general QKD device (the transmission device 1 and the reception device 2), an optical fiber 101 used as a quantum communication path, and an optical fiber 102 used as a classical communication path.

The transmission device 1 and the multiplexing device 3a, and the reception device 2 and the multiplexing device 3b are arranged in, for example, the same rack and connected by a short optical fiber. The multiplexing devices 3a and 3b are connected by an optical fiber 103 corresponding to a communication distance similarly to a general QKD device.

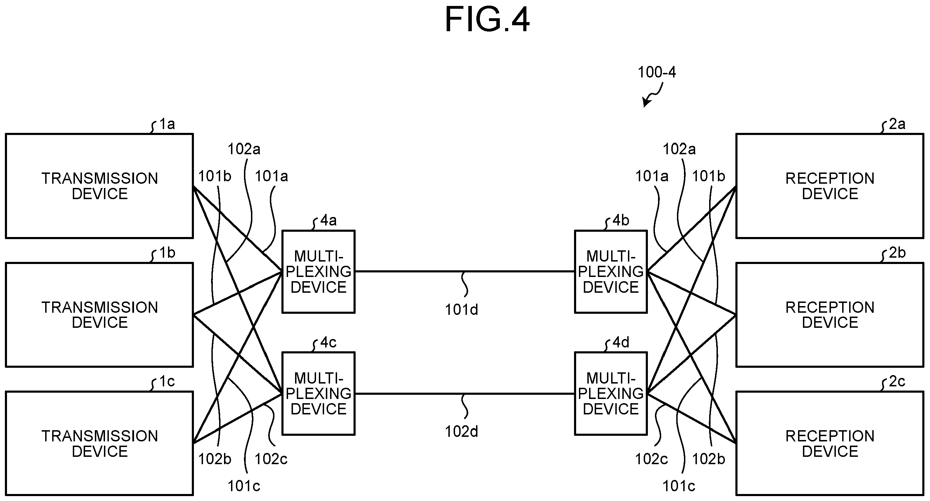

However, in Example 1 of Fig. 3, it is necessary to perform wavelength multiplexing of optical signals having different intensities, which is technically difficult. Therefore, as illustrated in Fig. 4, a method of wavelength-multiplexing the optical fibers 101a to 101c of the quantum communication path into one optical fiber 101d and wavelength-multiplexing the optical fibers 102a to 102c of the classical communication path into one optical fiber 102d is also considered.

Fig. 4 is a diagram illustrating Example 2 in a case where an optical wavelength multiplexing technique is used. In the QKD system 100-4 of Fig. 4, the multiplexing devices 4a and 4b perform wavelength multiplexing of the optical signals of the optical fibers 101a to 101c used for the quantum communication paths, and the multiplexing devices 4c and 4d perform wavelength multiplexing of the optical signals of the optical fibers 102a to 102c used for the classical communication paths.

It is easier to perform wavelength multiplexing of optical signals of the same intensity as in the QKD system 100-4 of Fig. 4 than to perform wavelength multiplexing of optical signals of different intensities as in the QKD system 100-3 of Fig. 3. In the wavelength multiplexing system illustrated in Fig. 3, if the number of QKD devices used to improve the transmission speed of the encryption key is increased, the number of required optical fibers 103 also increases in proportion to the number of QKD devices. On the other hand, in the wavelength multiplexing system illustrated in Fig. 4, the number of required optical fibers remains two even if the number of QKD devices for wavelength multiplexing increases, and the mounting cost can be suppressed.

In the multiplexing device 4 illustrated in Figs. 3 and 4, the optical signal is attenuated. In general, an optical signal of about 1 dB is attenuated per one device. As described above, since the quantum signal is very weak, attenuation of 2 dB of the total of two devices on the transmission side and the reception side greatly affects the performance (key generation speed) of the QKD device. The key generation speed reduction due to attenuation of 2 dB is 40%.

### First Arrangement

Hereinafter, an arrangement of a QKD system capable of suppressing a decrease in the key generation speed of a QKD device in wavelength multiplexing system will be described.

### Example of Device Configuration

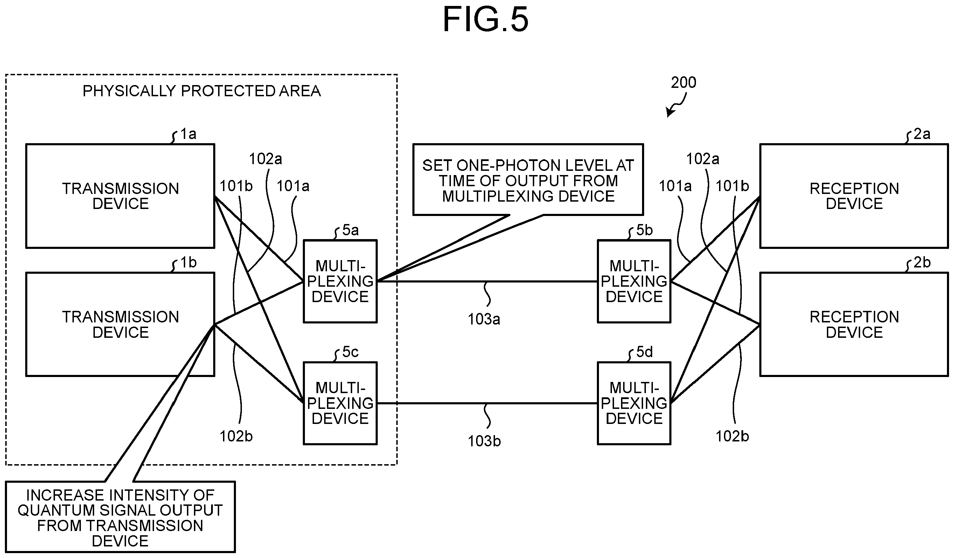

Fig. 5 is a diagram illustrating an example of a device configuration of a QKD system 200 according to the first arrangement. The QKD system 200 of the first arrangement includes transmission devices 1a to 1b, reception devices 2a to 2b, and multiplexing devices 5a and 5b. Note that the number of each of the transmission devices 1a to 1b and the reception devices 2a to 2b is not limited to two, and may be any number. The multiplexing devices 5a and 5b are connected by two optical fibers 103a to 103b. Hereinafter, in a case where the optical fibers 103a to 103b are not distinguished, they are simply referred to as optical fibers 103.

The multiplexing device 5a is installed on the transmission side and is connected to the quantum communication paths and the classical communication paths of the plurality of transmission devices 1a to 1b. The multiplexing device 5b is installed on the reception side and is connected to the quantum communication paths and the classical communication paths of the plurality of reception devices 2a to 2b. The multiplexing device 5a multiplexes the optical fibers 101a to 101b of the plurality of quantum communication paths into one optical fiber 103a. The multiplexing device 5b multiplexes the optical fibers 102a to 102b of the plurality of classical communication paths into one optical fiber 103b.

Hereinafter, in a case where the multiplexing devices 5a and 5b are not distinguished from each other, they are simply referred to as the multiplexing devices 5.

In order to solve the above problem, in the QKD system 200 of the first arrangement, the output intensity of the quantum signal of the transmission device 1 is increased by the attenuation of the multiplexing device 5. For example, if the output intensity of the quantum signal of the transmission device 1 is increased by 40% with respect to the attenuation of 2 dB (decrease of 40%) in two devices, the intensity of the quantum signal received by the reception device 2 is the same as that in a case where the multiplexing device 5 is not used. On the other hand, in this case, the quantum signal intensity from the transmission device 1 increases from the one-pulse one-photon level. That is, the probability that a plurality of photons is included in one pulse increases, and theoretical safety of quantum cryptography cannot be guaranteed (for example, Quantum key distribution with realistic states: photon-number statistics in the photon-number splitting attack, Norbert Lutkenhaus and Mika Jahma, New J.Phys.4(July 2002) 44.

The problem of increasing the intensity of the quantum signal output from the transmission device 1 is that the intensity of the quantum signal becomes one-photon level or more within a range accessible by an eavesdropper. Therefore, as illustrated in Fig. 5, the transmission device 1 and the multiplexing device 5 are installed in a physically protected area (for example, a server room or the like) where an eavesdropper cannot access the inside, and the output intensity of the quantum signal of the transmission device 1 is increased so that the intensity of the quantum signal at the time of output from the multiplexing device 5 becomes the one-photon level. In this way, in a range that can be accessed by an eavesdropper (outside a physically protected area), the intensity of the quantum signal transmitted by each transmission device 1 is at a one-photon level, and theoretical safety of quantum cryptography is maintained.

However, in the case of the example of Fig. 5, the intensity of the quantum signal of the transmission device 1 can be increased only by the attenuation of 1 dB of one multiplexing device 5, and the attenuation of the multiplexing device 5 on the reception side has an influence. In this case, the decrease in the key generation speed due to the attenuation of 1 dB of one multiplexing device 5 is 20%, and the decrease in the key generation speed is suppressed as compared with the case of the attenuation of 2 dB of two multiplexing devices 5.

### Example of Functional Configuration

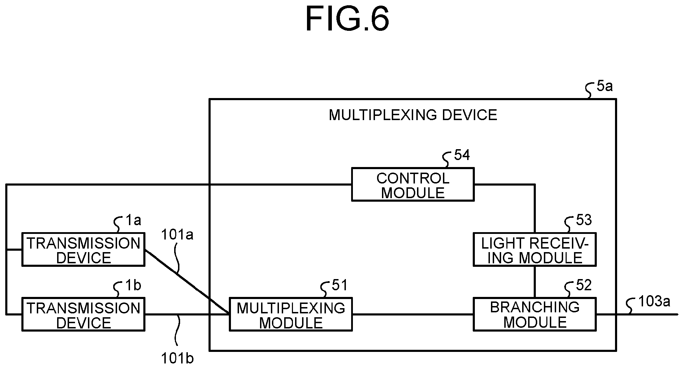

Fig. 6 is a diagram illustrating an example of a functional configuration of the multiplexing device 5a according to the first arrangement. The multiplexing device 5a of the first arrangement includes a multiplexing module 51, a branching module 52, a light receiving module 53, and a control module 54.

The multiplexing module 51 performs optical wavelength multiplexing on the quantum signals transmitted from the plurality of transmission devices 1. The multiplexing module 51 is realized by, for example, a wavelength division multiplexing (WDM) module such as a dense wavelength division multiplexing (DWDM) optical add/drop module.

The branching module 52 branches one input optical signal (quantum signal) into two optical signals at a predetermined branching ratio (for example, 50 : 50). One optical signal is output to the light receiving module 53, and the other optical signal is externally output (the optical fiber 103a of the quantum communication path). The branching module 52 is realized by, for example, a beam splitter or the like.

Note that the predetermined branching ratio may be arbitrary, but in general, by setting the branching ratio to 50 : 50, it is possible to prevent manufacturing errors in the process of attaching the branching module 52 (for example, a mistake or the like of installing at a reverse ratio).

The light receiving module 53 measures the intensity of the input optical signal and transmits the measurement result to the control module 54. The light receiving module 53 is realized by, for example, a photodiode or the like.

The control module 54 estimates the intensity of the quantum signal externally output (the optical fiber 103a of the quantum communication path) based on the measurement result of the light receiving module 53 and the branching ratio of the branching module 52. Then, the control module 54 instructs each transmission device 1 to adjust the output intensity of the quantum signal of each transmission device 1 so that the quantum signal of each of the plurality of transmission devices 1 to be output to the external of the multiplexing device 5a becomes one-photon level (one photon per one pulse). The control module 54 is realized by, for example, a microprocessor or the like.

Each transmission device 1 adjusts the output intensity of the quantum signal on the basis of the instruction received from the control module 54. As a result, the intensity of the quantum signal of each transmission device 1 can be automatically adjusted so that the quantum signal output from the multiplexing device 5 becomes one-photon level. That is, with the configuration illustrated in Fig. 6, the attenuation rate of the multiplexing device 5a on the transmission side is automatically considered, and the output intensity of the quantum signal of each transmission device 1 can be automatically adjusted. For example, even when the attenuation rate varies depending on the wavelength of the quantum signal of each transmission device 1, the intensity of the quantum signal of each transmission device 1 can be automatically adjusted.

### Example of Multiplexing Method

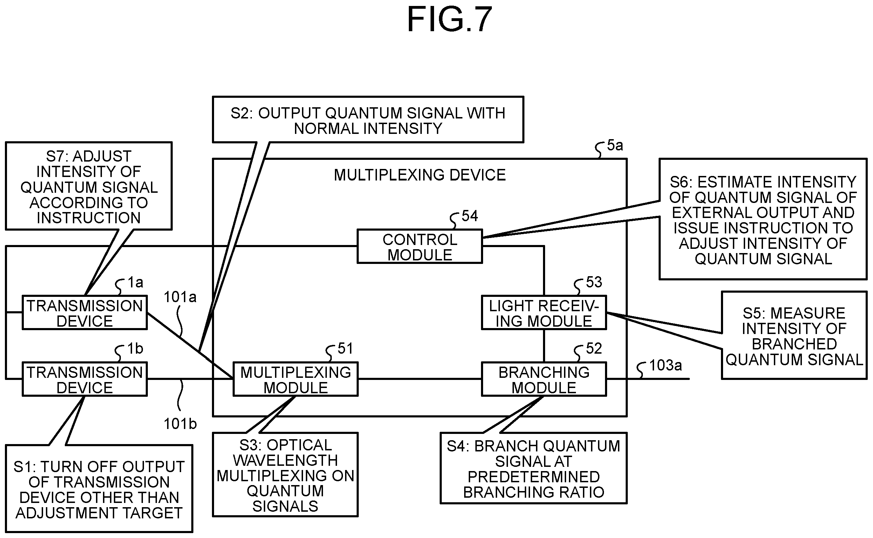

Fig. 7 is a diagram for explaining an example of a multiplexing method according to the first arrangement. The example of Fig. 7 illustrates an example of optical wavelength multiplexing of two transmission devices 1. The configuration of the multiplexing device 5 is the same as that in Fig. 6, and the functions of the components are as described above.

First, the transmission device 1b receives an instruction to turn off the output of the quantum signal of the transmission device 1 other than the adjustment target (in the example of Fig. 7, the transmission device 1a) from the control module 54, and turns off the output (Step S1).

Next, the transmission device 1a outputs a quantum signal with normal intensity (one-photon level) (Step S2).

Next, the multiplexing module 51 performs optical wavelength multiplexing on the quantum signals transmitted from the transmission devices 1a and 1b (Step S3). However, in the example of Fig. 7, since the output (output other than the adjustment target) of the transmission device 1b is turned off in the processing of Step S1, the quantum signal of the transmission device 1b is not included in the optical wavelength multiplexed quantum signals.

Next, the branching module 52 branches the quantum signal into signals for the light receiving module 53 and an external output (the optical fiber 103a of the quantum communication path) at a predetermined branching ratio (for example, 50 : 50) (Step S4). For example, in a case where the quantum signal at the one-photon level is the quantum signal at the 0.8-photon level (8 photons per 10 pulses) at the time of input to the branching module 52, the quantum signal at the 0.4-photon level is branched to the light receiving module 53 at the branching ratio of 50 : 50, and the quantum signal at the 0.4 photon level is branched to the external output.

Next, the light receiving module 53 measures the intensity of the branched quantum signal and transmits the measurement result to the control module 54 (Step S5).

Next, the control module 54 estimates the intensity of the quantum signal of the external output from the measurement result of the light receiving module 53 and the branching ratio of the branching module 52 (here, 50 : 50), and issues an instruction to adjust the intensity to the transmission device 1a so that the quantum signal of the external output has a predetermined intensity (for example, one-photon level) (Step S6). For example, in a case where the measurement result of the light receiving module 53 is at the 0.4-photon level, it is estimated that the intensity of the quantum signal of the external output is at the 0.4-photon level at the branching ratio of 50 : 50. In a case where the intensity is adjusted so that the quantum signal of the external output becomes the one-photon level, the control module 54 issues an instruction to set the output of the transmission device 1a to 2.5 times (2.5-photon level) to the transmission device 1a.

Next, the transmission device 1a adjusts the intensity of the quantum signal according to the instruction from the control module 54 (Step S7).

The adjustment of the quantum signal of the transmission device 1a is completed by the processing of Steps S1 to S7. The QKD system 200 of the first arrangement also adjusts the transmission device 1b using a similar method.

As described above, in the multiplexing device 5a of the first arrangement, the multiplexing module 51 performs optical wavelength multiplexing on the quantum signals transmitted from a plurality of QKD devices (in the example of Fig. 6, the transmission devices 1a and 1b). The branching module 52 branches the optical wavelength multiplexed quantum signals into a quantum signal to be measured and a quantum signal to be externally output at a predetermined branching ratio. The light receiving module 53 measures the intensity of the quantum signal to be measured and acquires a measurement result. Then, the control module 54 adjusts the intensity of the quantum signal output from each of the plurality of QKD devices on the basis of the measurement result and the predetermined branching ratio.

As a result, according to the multiplexing device 5a of the first arrangement, it is possible to prevent the key generation speed of the QKD device from decreasing due to attenuation by the multiplexing device 5a in the wavelength multiplexing system. Specifically, in a configuration in which quantum signals transmitted from the plurality of QKD devices are subjected to optical wavelength multiplexing by the multiplexing device 5a, it is possible to prevent a decrease in key generation speed due to the presence of the multiplexing device 5a while ensuring theoretical safety of quantum cryptography.

### Second Arrangement

Next, a second arrangement will be described. In the description of the second arrangement, the description similar to that of the first arrangement will be omitted, and points different from those of the first arrangement will be described.

In the first arrangement described above, in order to adjust the output intensity of the quantum signal of each transmission device 1, it is necessary to turn off the output of the transmission device 1 other than the adjustment target. This is because the intensity of the quantum signal measured by the light receiving module 53 becomes the sum of the quantum signals of the plurality of transmission devices 1, and the intensity of the quantum signal of one transmission device 1 cannot be measured. In the first arrangement described above, the number of times of controlling ON/OFF of the output of the transmission device 1 increases as the number of transmission devices 1 increases.

Therefore, in the second arrangement, a configuration in which the intensity of the quantum signal of the transmission device 1 to be adjusted can be adjusted while the output of the quantum signal of the transmission device 1 other than the adjustment target also remains turned on will be described.

### Example of Functional Configuration

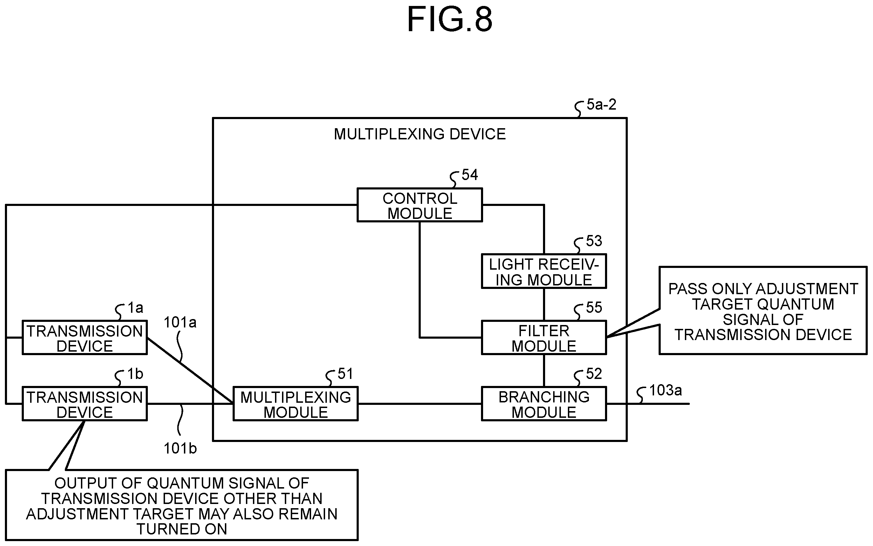

Fig. 8 is a diagram illustrating an example of a functional configuration of a multiplexing device 5a-2 according to the second arrangement. The multiplexing device 5a-2 of the second arrangement includes a multiplexing module 51, a branching module 52, a light receiving module 53, a control module 54, and a filter module 55. In the second arrangement, the filter module 55 is added at a position illustrated in Fig. 8.

The filter module 55 is a filter that passes only a quantum signal of a specific wavelength, and the passing wavelength is variable. The wavelengths of the quantum signals transmitted from the plurality of transmission devices 1 are different from each other. The filter module 55 includes a variable filter that allows a quantum signal having a wavelength to be adjusted to pass and does not allow a quantum signal having a wavelength other than the wavelength to be adjusted to pass. For example, the filter module 55 changes the wavelength to pass through the filter module 55 in accordance with an instruction from the control module 54.

The filter module 55 allows the light receiving module 53 to measure only the intensity of the quantum signal of the transmission device 1 to be adjusted. As a result, it is not necessary to turn off the outputs of the transmission devices 1 other than the adjustment target, and the output intensity of the quantum signal of each transmission device 1 can be adjusted by changing the wavelength of the filter module 55.

### Third Arrangement

Next, a third arrangement will be described. In the description of the third arrangement, the description similar to that of the first arrangement will be omitted, and points different from those of the first arrangement will be described.

In the first arrangement described above, each transmission device 1 adjusts the output intensity of the quantum signal in response to an instruction from the external control module 54, but the state in which the output intensity of the quantum signal of the transmission device 1 can be freely adjusted externally is not good in terms of security.

Therefore, in the third arrangement, a configuration in which the intensity of the quantum signal of the transmission device 1 to be adjusted can be adjusted while maintaining security will be described.

### Example of Functional Configuration

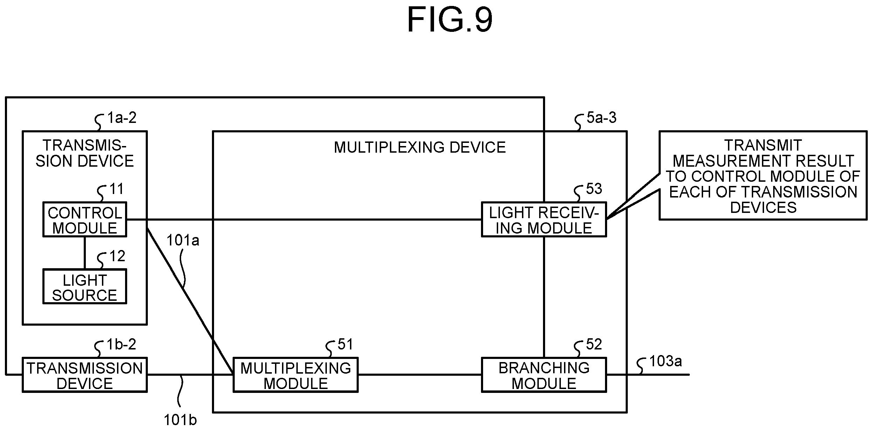

Fig. 9 is a diagram illustrating an example of a functional configuration of a multiplexing device 5a-3 and a transmission device 1a-2 according to the third arrangement. The multiplexing device 5a-3 of the third arrangement includes a multiplexing module 51, a branching module 52, and a light receiving module 53. The transmission device 1a -2 of the third arrangement includes a control module 11 and a light source 12. In the third arrangement, the multiplexing device 5a-3 does not include the control module 54, and the control module 11 is added to the transmission device 1a-2. Note that the functional configuration of the transmission device 1b-2 is also the same as that of the transmission device 1a-2.

The control module 11 adjusts the intensity of the quantum signal transmitted from the light source 12 on the basis of the predetermined branching ratio and the intensity of the quantum signal to be measured branched at a predetermined branching ratio from the quantum signal obtained by performing optical wavelength multiplexing on the quantum signal transmitted from another QKD device (in the example of Fig. 9, the transmission device 1b -2) connected to the multiplexing device 5a -3 and the quantum signal transmitted from the light source 12.

In the configuration of the third arrangement, in the multiplexing device 5a-3, up to the measurement of the intensity of the quantum signal by the light receiving module 53 is performed. The measurement result is transmitted to the control module 54 of each of the transmission devices 1a-2 and 1b-2. Then, when the control module 54 of each of the transmission devices 1a-2 and 1b-2 receives the measurement result of the intensity of the quantum signal to be measured from the multiplexing device 5a-3, the control module 54 adjusts the intensity of the quantum signal transmitted from the light source 12 on the basis of the measurement result and the predetermined branching ratio. As a result, the intensity of the quantum signal of the transmission device 1 to be adjusted can be adjusted while maintaining security.

### Modification of Third Arrangement

Next, a modification of the third arrangement will be described. In the description of the modification, the description similar to that of the third arrangement will be omitted, and points different from those of the third arrangement will be described.

### Example of Functional Configuration

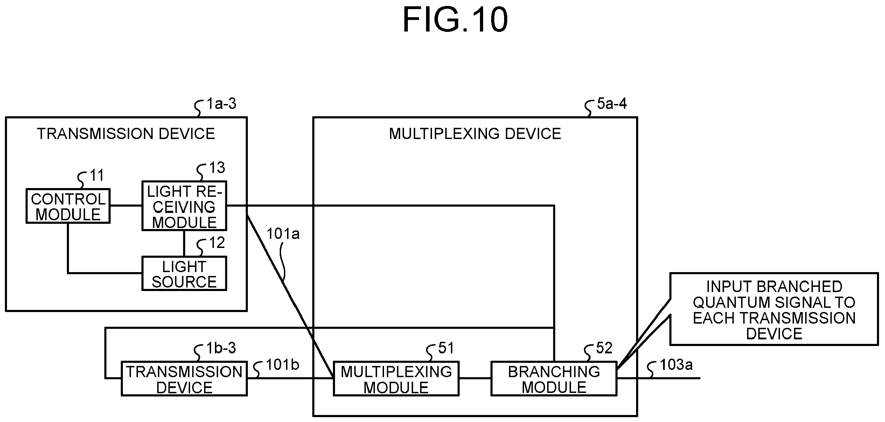

Fig. 10 is a diagram illustrating an example of a functional configuration of a multiplexing device 5a-4 and a transmission device 1a-3 according to the modification of the third arrangement. The multiplexing device 5a-4 of the modification includes a multiplexing module 51 and a branching module 52. The transmission device 1a-3 of the modification includes a control module 11, a light source 12, and a light receiving module 13. In the modification, the multiplexing device 5a-3 does not include the light receiving module 53, and the light receiving module 13 is added to the transmission device 1a-3. Note that the functional configuration of the transmission device 1b-3 is also the same as that of the transmission device 1a-3.

In the case of the modification, the multiplexing module 51 performs optical wavelength multiplexing on the quantum signals of the transmission devices 1a-3 and 1b-3. Then, the branching module 52 branches the optical wavelength multiplexed quantum signals at a predetermined branching ratio, and transmits the branched quantum signal to be measured to each of the transmission devices 1a-3 and 1b-3.

In each of the transmission devices 1a-3 and 1b-3, the light receiving module 13 measures the intensity of the quantum signal to be measured branched at the predetermined branching ratio and inputs the measurement result to the control module 11. The control module 11 adjusts the intensity of the quantum signal on the basis of the measurement result and the branching ratio of the branching module 52.

The first advantage of the configuration of this modification is that the configuration of the multiplexing device 5a-4 can be simplified.

The second advantage of the configuration of this modification is that the mechanisms of the transmission devices 1a-3 and 1b-3 can be effectively used. Usually, the transmission device 1 includes a mechanism that measures the intensity of the quantum signal for controlling the light source 12 and feeds back the result to the light source control, and in the modification, the mechanism already provided can be effectively used.

While certain arrangements have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

### Supplement

Note that the above arrangements can be summarized in the following technical ideas.

Example 1. A multiplexing device includes a multiplexing module, a branching module, a light receiving module, and a control module. The multiplexing module is configured to perform optical wavelength multiplexing on quantum signals transmitted from a plurality of quantum key distribution (QKD) devices. The branching module is configured to branch an optical wavelength multiplexed quantum signal, at a predetermined branching ratio, into a quantum signal to be measured and a quantum signal to be output to external. The light receiving module is configured to measure intensity of the quantum signal to be measured to acquire a measurement result. The control module is configured to adjust intensity of the quantum signal output from each of the plurality of QKD devices based on the measurement result and the predetermined branching ratio.

Example 2. In the multiplexing device according to Example 1, the control module is configured to adjust the intensity of the quantum signal to be output from each of the plurality of QKD devices so that the quantum signal of each of the plurality of QKD devices to be output to the external of the multiplexing device is one photon per pulse.

Example 3. In the multiplexing device according to Example 1 or 2, wavelengths of the quantum signals transmitted from the plurality of QKD devices are different from each other, and the multiplexing device further comprises a filter module including a variable filter configured to allow a quantum signal having a wavelength to be adjusted to pass therethrough and not to allow a quantum signal having a wavelength other than the wavelength to be adjusted to pass therethrough.

Example 4. A QKD system includes the multiplexing device according to Example 1 or 2 and the plurality of QKD devices.

Example 5. A quantum key distribution (QKD) device connected to a multiplexing device includes a light source and a control module. The light source is configured to transmit a quantum signal. The control module is configured to adjust intensity of a quantum signal transmitted from the light source, based on a predetermined branching ratio and intensity of a quantum signal to be measured branched at the predetermined branching ratio, from a quantum signal obtained by optical wavelength multiplexing of a quantum signal transmitted from another QKD device connected to the multiplexing device and the quantum signal transmitted from the light source.

Example 6. In the QKD device according to Example 5, the control module is configured to receive a measurement result of the intensity of the quantum signal to be measured from the multiplexing device, and adjust the intensity of the quantum signal transmitted from the light source based on the measurement result and the predetermined branching ratio.

Example 7. In the QKD device according to Example 5, the QKD device further includes a light receiving module configured to measure the quantum signal to be measured branched at the predetermined branching ratio from the optical wavelength multiplexed quantum signal to acquire a measurement result, and the control module is configured to adjust the intensity of the quantum signal transmitted from the light source based on the measurement result and the predetermined branching ratio.

Example 8. A multiplexing method includes: performing, by a multiplexing device, optical wavelength multiplexing on quantum signals transmitted from a plurality of quantum key distribution (QKD) devices; branching, by the multiplexing device, an optical wavelength multiplexed quantum signal, at a predetermined branching ratio, into a quantum signal to be measured and a quantum signal to be output to external; measuring, by the multiplexing device, intensity of the quantum signal to be measured to acquire a measurement result; and adjusting, by the multiplexing device, intensity of the quantum signal output from each of the plurality of QKD devices based on the measurement result and the predetermined branching ratio.

Example 9. An adjustment method for a quantum key distribution (QKD) device connected to a multiplexing device includes: transmitting, by a light source, a quantum signal; and adjusting, by a control module, intensity of a quantum signal transmitted from the light source, based on a predetermined branching ratio and intensity of a quantum signal to be measured branched at the predetermined branching ratio, from a quantum signal obtained by optical wavelength multiplexing of a quantum signal transmitted from another QKD device connected to the multiplexing device and the quantum signal transmitted from the light source.

## Claims

1. A multiplexing device (5) comprising:
a multiplexing module (51) configured to perform optical wavelength multiplexing on quantum signals transmitted from a plurality of quantum key distribution (QKD) devices (1, 2);
a branching module (52) configured to branch an optical wavelength multiplexed quantum signal, at a predetermined branching ratio, into a quantum signal to be measured and a quantum signal to be output to external;
a light receiving module (53) configured to measure intensity of the quantum signal to be measured to acquire a measurement result; and
a control module (54) configured to adjust intensity of the quantum signal output from each of the plurality of QKD devices (1, 2) based on the measurement result and the predetermined branching ratio.

2. The multiplexing device (5) according to claim 1, wherein
the control module (54) is configured to adjust the intensity of the quantum signal to be output from each of the plurality of QKD devices (1, 2) so that the quantum signal of each of the plurality of QKD devices (1, 2) to be output to the external of the multiplexing device (5) is one photon per pulse.

3. The multiplexing device (5) according to claim 1 or 2, wherein
wavelengths of the quantum signals transmitted from the plurality of QKD devices (1, 2) are different from each other, and
the multiplexing device (5) further comprises a filter module (55) including a variable filter configured to allow a quantum signal having a wavelength to be adjusted to pass therethrough and not to allow a quantum signal having a wavelength other than the wavelength to be adjusted to pass therethrough.

4. A QKD system comprising:
the multiplexing device (5) according to claim 1 or 2; and
the plurality of QKD devices (1, 2).

5. A quantum key distribution (QKD) device connected to a multiplexing device (5), the QKD device (1) comprising:
a light source (12) configured to transmit a quantum signal; and
a control module (11) configured to adjust intensity of a quantum signal transmitted from the light source (12), based on a predetermined branching ratio and intensity of a quantum signal to be measured branched at the predetermined branching ratio, from a quantum signal obtained by optical wavelength multiplexing of a quantum signal transmitted from another QKD (2) device connected to the multiplexing device (5) and the quantum signal transmitted from the light source (12).

6. The QKD device (1) according to claim 5, wherein
the control module (11) is configured to receive a measurement result of the intensity of the quantum signal to be measured from the multiplexing device (5), and adjust the intensity of the quantum signal transmitted from the light source (12) based on the measurement result and the predetermined branching ratio.

7. The QKD device (1) according to claim 5, further comprising:
a light receiving module (13) configured to measure the quantum signal to be measured branched at the predetermined branching ratio from the optical wavelength multiplexed quantum signal to acquire a measurement result, wherein
the control module (11) is configured to adjust the intensity of the quantum signal transmitted from the light source (12) based on the measurement result and the predetermined branching ratio.

8. A multiplexing method comprising:
performing, by a multiplexing device (5), optical wavelength multiplexing on quantum signals transmitted from a plurality of quantum key distribution (QKD) devices (1, 2) ;
branching, by the multiplexing device (5), an optical wavelength multiplexed quantum signal, at a predetermined branching ratio, into a quantum signal to be measured and a quantum signal to be output to external;
measuring, by the multiplexing device (5), intensity of the quantum signal to be measured to acquire a measurement result; and
adjusting, by the multiplexing device (5), intensity of the quantum signal output from each of the plurality of QKD devices (1, 2) based on the measurement result and the predetermined branching ratio.

9. An adjustment method for a quantum key distribution (QKD) device (1) connected to a multiplexing device (5), the method comprising:
transmitting, by a light source (12), a quantum signal; and
adjusting, by a control module (11), intensity of a quantum signal transmitted from the light source (12), based on a predetermined branching ratio and intensity of a quantum signal to be measured branched at the predetermined branching ratio, from a quantum signal obtained by optical wavelength multiplexing of a quantum signal transmitted from another QKD device (2) connected to the multiplexing device (5) and the quantum signal transmitted from the light source (12).
